# EUROPEAN PATENT APPLICATION

(11) **EP 1 533 605 A2**
(43) Date of publication of application: **25.05.2005**
(21) Application number: 04078160.1
(22) Date of filing: 18.11.2004
(51) Int. Cl.: G01N 15/14

(54) **Micro control system for transfer of liquids**

(30) Priority: 19.11.2003 JP 2003389447
(71) Applicant: Aisin Seiki Kabushiki Kaisha, Kariya-shi, Aichi-ken 448-8650 (JP)
(72) Inventor: Kawano, Takashi, c/o Aisin Cosmos R&D Co Ltd, Kariya, Aichi 448-8650 (JP); Kanai, Naritoshi, c/o Aisin Cosmos R&D Co Ltd, Kariya, Aichi 448-8650 (JP); Yamamoto, Masanori, c/o Aisin Engineering Co Ltd., Kariya, Aichi, 448-8605 (JP)
(74) Representative: SERJEANTS

(57) **Abstract**

The invention provides a micro liquid control system suitable for use in a flow cytometer. by creating a flow of fine target objects carried in droplets (9) of a second liquid (52) entrained in a first liquid flow, the system allows for high speed, large quantity processing for sorting the target objects. The system comprises a liquid flow micro channel (1) which includes a main channel (10) leading to a sorting channel means (12. The first liquid (14) flows along the main channel (10). Fine droplets (9) of the second liquid (52) are formed in that flow. Electrical charging means (3A) selectively apply an electric charge of a given polarity to target droplets (9) to be sorted. Sorting means (41,42;8) comprises either electrodes (41,42) for establishing a magnetic field or electromagnetic means (8) for establishing a magnetic field across the main channel (10) to collect together the target droplets (9) in selected sorting channels (121,122) of the sorting channel means (12).

## Description

### Field of the Invention

This invention relates to a micro liquid control system which selects and sorts target objects such as droplets. The droplets may be sorted according to fine particulate material, such as cell material, which they contain, making the system suitable for use in flow cytometers.

### Description of the Related Art

Japanese Laid-Open Patent Application No. H10(1998)-267801 (hereinafter referred to as prior Patent document 1) discloses a handling apparatus for fine liquid particles wherein a plurality of electrodes is arranged to form an electrode array on a substrate; droplets of agents and specimen are formed; the droplets are put on the hydrophobic surface; transporting of the droplets is performed by electrostatic force with the voltage application in sequence to the electrode array. The phase surrounding the droplets is not liquid phase but gas phase. According to this invention, the droplets are transported using an electrostatic force by applying a voltage to the electrode array in sequence and hence a pump to transport the droplets is not necessary.

Japanese Laid-Open Patent Application No. 2002-163022 (hereinafter referred to as prior Patent document 2) discloses a flow control technology in a micro system wherein a material which is converted between sol and gel by an external stimulation is added to a liquid which flows through a fine flow channel in the micro system. By applying a stimulation to an appropriate part of the fine flow channel, the liquid is converted to gel to form a barrier. The barrier is converted back to the liquid phase when the stimulation is removed so that the flow of the liquid is controlled. According to this invention, a closing valve is formed by utilizing the phase change from sol to gel and an opening valve is formed by utilizing the phase change from gel to sol.

Japanese Laid-Open Patent Application No. 2002-528699 (hereinafter referred to as prior Patent document 3) discloses a micro cell sorter wherein a cell is placed in an electrolyte solution containing ions, and an electric current is applied to an electrode inserted in the electrolyte solution to select the cell.

According to the above-described invention of prior Patent document 1, droplets are transported with an array of electrodes, which do not select the droplets according to species of the individual droplets. The droplets are transported in aerosol form, and because the droplets are transported with electrostatic force, the transportation speed is slow and the system is not suitable for a high speed, large quantity processing. Furthermore, since the phase surrounding the droplets is not liquid phase but gas phase, the droplets easily evaporate.

According to the above-described technology according to prior Patent document 2, a micro specimen flows along with the flow of a liquid. But, since it utilizes chemical phase changes from sol to gel and from gel to sol, the response time is slow and it is not suitable for high speed, large quantity processing. And, as the system creates a closing valve using the phase change from sol to gel and an opening valve using the phase change from gel to sol, the flow stagnates around the valves and is easily choked so that the controllability of the liquid is not good enough.

According to the above-described technology according to prior Patent document 3, individual cells can be selected and sorted. However because an electric current is applied to an electrode inserted in the electrolyte solution, the temperature of the electrolyte solution may rise depending on conditions, which is not preferable for sustaining the life of living cells which may be contained in the electrolyte solution.

### SUMMARY OF THE INVENTION

The present invention provides a micro liquid control system in which a micro target object such as a droplet is carried by a flow of a first liquid. It has an objective of high speed and large quantity processing and also it can select and sort the target objects in units.

The invention is as specified in claim 1.

According to a first aspect of the invention, the sorting means comprises means for establishing an electrostatic field through which the charged droplets flow. The electrostatic field is established between a pair of electrodes which move the droplets flowing in the main channel with an attractive or repulsive force depending on the electrical charge carried by the individual droplets, so that target droplets are selectively diverted to be collected together in the sorting channel means.

According to a second aspect of the invention, the sorting means comprises means for establishing a magnetic field through which the charged droplets flow. The magnetic field moves the droplets flowing in the main channel with an electromagnetic force in a direction, which depends on the electrical charge carried by the individual droplets, so that target droplets are selectively diverted to be collected together in the sorting channel means.

### BRIEF DESCRIPTION OF THE DRAWINGS

Fig. 1 shows schematically the configuration of a micro liquid control system of the first embodiment.
Fig. 2 is the sectional view taken along the line D-D of Fig. 1.
Fig. 3 shows schematically the configuration of the main part of the micro liquid control system of the first embodiment.
Fig. 4 is the sectional view around a sorter part of the electrical charging part of the first embodiment and is the view taken along the line VI-VI of Fig. 3.
Fig. 5 shows schematically the configuration of a main part of a micro liquid control system of the second embodiment.
Fig. 6 is the perspective view of a droplet counting part.
Fig. 7 is the perspective view of a droplet counting part related to the other example.
Fig. 8 shows schematically the configuration of an information detecting part of the present invention.
Fig. 9 shows the configuration around a sorter channel related to the other embodiment.
Fig. 10 is the explanatory figure showing the process of forming a droplet by a droplet forming means.
Fig. 11 is the explanatory figure showing the process of forming the droplet by the droplet forming means.
Fig. 12 is the explanatory figure showing the process of forming the droplet by the droplet forming means.
Fig. 13 is the view taken along the line A-A of Fig. 10.

### DESCRIPTION OF THE PREFERRED EMBODIMENTS

According to both embodiments of the present invention, a configuration is disclosed where the target object is electrically charged during the formation of the droplet target object. Here, "period during the formation of the droplet target object" refers to the status just before the formation of the droplet target object, the status during the process of formation of the droplet target object, or the status just after the formation of the droplet target object. And, in the present specification, the micro target object may be droplets or micro particles of 2 mm or less, or 1 mm or less, or 0.1 mm or less.

### 1 FIRST EMBODIMENT

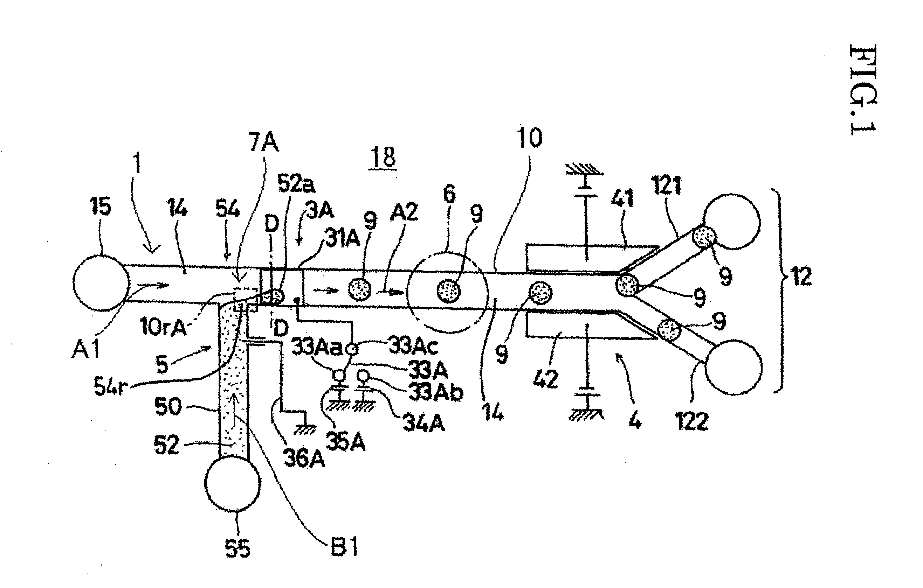

Fig. 1 shows a micro liquid control system of the first embodiment. The micro liquid control system comprises a microchannel 1 through which flows at least one droplet 9 as target object together with main liquid 14. The system also comprises a droplet forming means 5 which forms droplets 9 suspended in main liquid 14, a droplet counting means 6 which counts formed droplets 9, and a sorting means 4 which sorts the droplets 9. Also, the system comprises an electrical charging means 3A which charges the droplets 9. The electrical charging means 3A is provided at the upstream side of the droplet counting means 6.

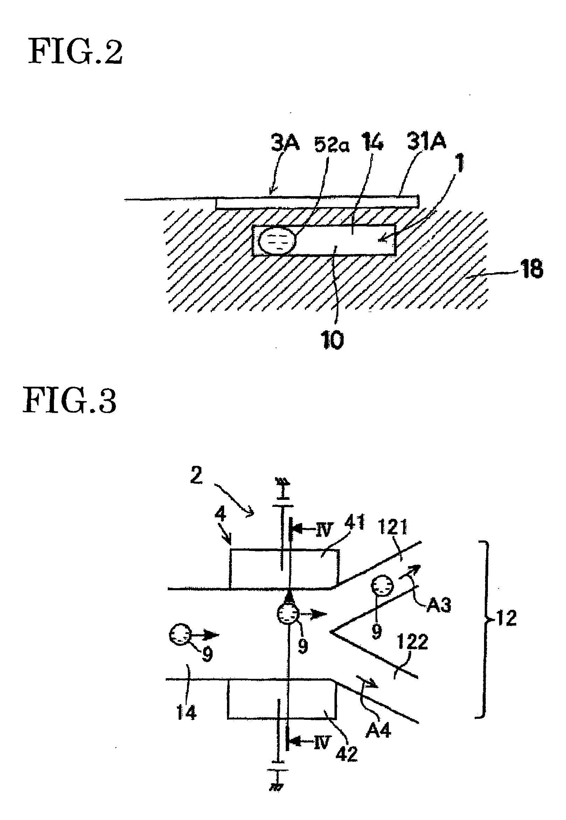

As shown in Fig. 1, a microchannel 1 is provided in a transparent substrate 18 made of resin or glass. The microchannel 1 comprises a main channel 10 which carries a flow of a first liquid, or main liquid, 14 in which small size droplets 9 as a small target object are dispersed and a sorting channel means 12 which is provided at the downstream side of the main channel 10 to receive the sorted target objects. At the upstream side of the main channel 10, a pump 15 is provided which discharges the main liquid 14 to the microchannel 1 to create a flow in the direction of the arrow A1. The sorting channel means 12 has a Y branch at the downstream side of the main channel 10 to form a first sorting channel 121 and a second sorting channel 122. Also a droplet selecting means 2 (target object selecting means) (Fig.3) is provided which selects the droplets 9 which flow in the microchannel 1 and supplies them to the sorting channel means 12.

The system also includes a droplet forming means 5 (target object forming means) which forms the droplets 9 and flows them to the downstream side, and a droplet counting means 6 (target object counting means) which detects and counts the droplets 9 formed by the droplet forming means 5. And, an information detecting means 7A which performs detection processing of the target objects (droplets 9) and detects information about the target objects.

As shown in Fig. 1, the droplet forming means 5 includes a droplet forming channel 50. The droplet forming channel 50 is a side channel through which flows a second liquid, or parent phase liquid, 52 which is the parent phase of the droplets 9. The channel 50 intersects at a junction 54 with the upstream side of the main channel 10, just downstream of the pump 15. A pump 55 discharges the parent phase liquid 52 into the droplet forming channel 50 to create a flow in the direction of the arrow B1 (Fig. 1). In this case, the parent phase liquid 52 which is discharged into the main channel 1 at the junction 54 is separated by the sheer force of the main liquid 14 which flows in the main channel 10, and droplets 9 are formed. The average diameter of the formed droplets 9 (target object) depends on the type of the liquid and may be 1,000 µm or less, or 500 µm or less, or 300 µm or less, and may be 1 to 800 µm, or especially 2 to 500 µm or 4 to 300 µm. But the size of the droplets 9 is not limited to these values.

The parent phase liquid 52 may comprise water as its main component. On the other hand, the main liquid 14 may comprise a material that has a high electric insulating property and low solubility in water, such as oil or a fluorocarbon which are hydrophobic. The oil may be chosen from, for example, sunflower oil, olive oil, tung oil, linseed oil, silicone oil and mineral oil. The lubricating qualities of the oil improve its passage through the main channel 10.

The main component of the parent phase liquid 52 is water which is electrically conductive and has a larger dielectric constant than that of the oily main liquid 14. Thus, the formed droplets 9 are so-called water-in-oil type droplets. The formed droplets 9 flow with the main liquid 14 in the main channel 10 of the microchannel 1 in the direction of the sorting channel 12 (in the direction of Arrow A2).

As the droplets 9 flow in the microchannel 1 to the downstream side in the direction of the arrow A2, the individual droplets are entrained in the main liquid 14. Since the oil-based main liquid 14 has a low solubility in the parent phase liquid 52, the droplets 9 flow stably in the downstream direction with little mixing between the lyophobic and hydrophobic components.

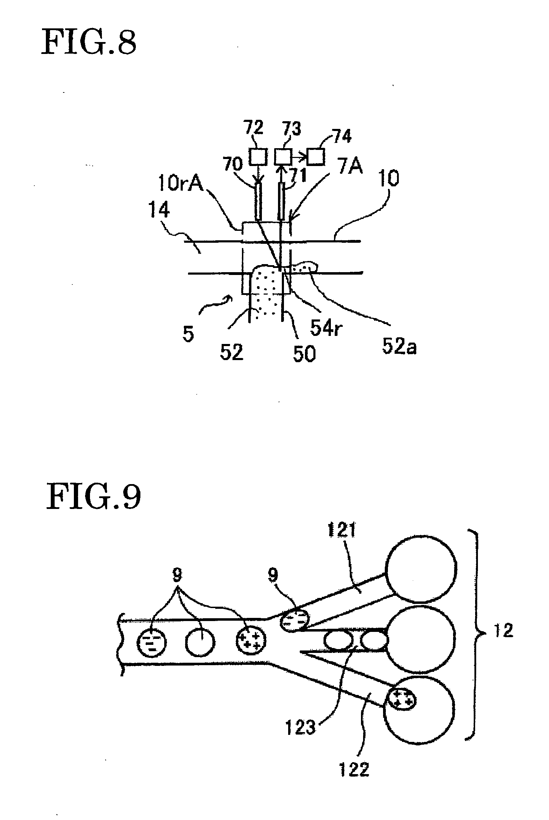

As shown in Fig. 1, an information detecting means 7A is provided near a detecting position 10rA of the main channel 10 of the microchannel 1. As shown in Fig. 8, an optical detection means is preferably adopted as the information detecting means 7A, which comprises optical fibres 70 and 71 whose extremities face the detecting position 10rA; a light emitting part 72 including a laser element which emits a laser beam to the other end of the fibre 71; a light receiving part 73 which receives light irradiated from the droplet 9; a detecting part 74 which detects information about the target object based upon the signal received by a light receiving part 73. Since the extremities of the optical fibres 70 and 71 are arranged in the vicinity of the parent phase liquid of the detecting position 10rA, the main components 72, 73 and 74 of the optical system of the information detecting part 7A can be provided away from the droplet 9 where they do not get in the way.

In the present embodiment, the electrical charging means 3A is provided between the downstream side of the junction 54 and the upstream side of a droplet counting part 6 very close to the junction 54. The electrical charging means 3A has a charging electrode 31A. This charging electrode 31A can be connected to a power source 34A or 35A through a switch 33A. When terminals 33Aa and 33Ac are connected by the switch 33A, the polarity of the charging electrode 31A is positive. On the other hand, when the terminals 33Ab and 33Ac are connected by the switch 33A, the polarity of the charging electrode 31A becomes negative. Accordingly, the switch 33A operates as a polarity switching means for the charging electrode 31A.

In addition, the charging electrode 31A is provided, as shown in Fig. 2, over a microchannel 1 (especially a main channel 10). That is, as shown in Fig. 1, the parent phase liquid 52 passing from the droplet forming channel 50 through the junction 54 is pushed by the main liquid 14 in the microchannel 1, and when the extremity part, or leading surface or boundary, 52a of the parent phase liquid 52 takes a position just below the downstream side of the junction 54 in the main channel 10, the charging electrode 31A is arranged to be right above the extremity part 52a of the parent phase liquid 52.

In addition, as shown in Fig. 1, one end of a conductor 36A is arranged to make contact with the parent phase liquid 52 in the droplet forming channel 50 and the other end of the conductor 36A is connected to ground potential. Accordingly, the parent phase liquid 52 in the droplet forming channel 50 is connected to ground potential through the conductor 36A.

According to the present embodiment, during the formation of the droplet 9, the extremity part 52a, immediately before the droplet 9 is formed, can be electrically charged by the charging electrode 31A. Also, the polarity of the charge of the droplet 9 can be selected to be positive or negative by changing the polarity of the charging electrode 31A.

Hereinafter, more specifically, the operation of the electrical charging means 3A will be explained. The parent phase liquid 52 may be, for example, a cell suspension containing a cell. When the cell contained in the parent phase liquid 52 entering into the cross area 54 is a target cell which has a special characteristic, the droplet 9, is charged to be positive or negative.

Here, the case will be explained where the droplet 9 is charged to be negative when the cell is the target cell having the special characteristic. The charging electrode 31A is made positive by the connection to the power source 35A through the switch 33A. With this, when the extremity part 52a of the parent phase liquid 52 entering into the junction 54 approaches the charging electrode 31A, the part of the extremity part 52a which faces the charging electrode 31A tends to become negative by electrostatic induction. In addition, the part which is far from the charging electrode 31A tends to become positive. Here, the parent phase liquid 52 still in the droplet forming channel 50 is connected to ground potential through the terminal 36A, and the excessive positive charge (the charge with the same polarity as that of the charging electrode 31A) induced in the extremity part 52a escapes to the conductor 36A through the parent phase liquid 52 in the droplet forming channel 50 (charge discharge mechanism). Therefore, the extremity part 52a just before being severed from the parent phase liquid 52 in the channel 50 has a negative polarity. As a result, the droplet 9 has a negative polarity after being severed.

In addition, when no cell having a special characteristic is contained in the parent phase liquid 52 entering into the junction 54, the charging electrode 31A is connected to the power source 34A through the switch 33A and the polarity of the charging electrode 31A becomes negative. Accordingly the extremity part 52a just before being severed has a positive polarity and the droplet 9 has a positive polarity after it is severed.

In the example given, the droplet 9 is charged to a negative polarity when it contains a target cell which has the special characteristic, and the droplet 9 is charged to a positive polarity when it contains no target cell, but the opposite polarity assignment may be adopted as well.

Whether the cell contained in the parent phase liquid 52 entering into the junction 54 is the target cell having a special characteristic or not is judged by the target selecting means 7A provided at the detecting position 10rA near the junction 54. In this target selecting means 7A, inspecting light is irradiated onto the cell contained inside the droplet 9. In this case, the inspecting light is projected to the cell contained in the extremity part 52a just before being severed or to the cell contained in the parent phase liquid 52 before being transferred to the extremity part 52a.

The target selecting means 7A can identify individual droplets containing selected target cells or other target fine particulate material. Preferably the droplet size and the concentration of the fine particulate material dispersed in the parent liquid 52 is such as to create a monodisperse suspension of at most one fine particle per droplet 9. The droplets 9 selected as containing target material become target droplets 9, and the electrical charging means 3A is controlled, by controlling the switch 33A, to provide a selected positive or negative electric charge to only those target droplets 9.

Because the parent phase liquid 52 itself in the droplet forming channel 50 is connected to ground potential by the conductor 36A, this means that the extremity part 52a just before being severed is grounded to the conductor 36A through the parent phase liquid 52 in the droplet forming channel 50. Therefore, the excessive charge of the extremity part 52a or the cell contained in the extremity part 52a which has the same polarity as that of the charging electrode 31A can be dissipated through the conductor 36A.

In the case that the droplet 9 were to be charged after the formation of the droplet 9, an electrode contacting the droplet 9 would be necessary for dissipating charge from the side of the droplet remote from the charging electrode 31A. Such a charge dissipation electrode would be installed so as to face the charging electrode, and the droplet would have to be of a size such that it contacted the charge dissipation electrode. However it will be understood that such a charge dissipation electrode is not necessary in the illustrated embodiment which generates the charge on the droplet during its formation.

In addition, in order to change the polarity of charges depending on whether it is the target cell or not, the information detecting means 7A which detects whether it is the target cell or not must be provided at the upstream side of the charging electrode 31A which charges the extremity part 52a. For this reason, the target selecting means 7A is arranged at the detecting position 10rA near the junction 54 at the upstream side of the charging electrode 31A. The inspecting light irradiates a narrow liquid width area 54r of the detecting position 10rA where the liquid width is narrowed. Since the liquid width area 54r which is irradiated by the inspecting light is narrow, a fluctuation of the cell position in the direction of the liquid width is suppressed and hence a cell detection fluctuation is suppressed.

As shown in Fig. 3, the sorting means 4 comprises a first selecting electrode 41 and a second selecting electrode 42 which are provided at opposite sides of the main channel 10. The first selecting electrode 41 has a positive polarity while the second selecting electrode 42 has a negative polarity, although they are not limited to this polarity arrangement but may be polarized oppositely.

According to Fig. 3, when the droplet 9 of the predetermined polarity arrives at the sorting means 4 from the electrical charging part 3A, the droplet 9 is sorted according to its polarity. That is, if the droplet 9 has a negative polarity, the droplet 9 is attracted by the first selecting electrode 41 of positive polarity by electrostatic attractive force (Coulomb's force) and flows into a first sorting channel 121 in the direction of the arrow A3. The diversion into the first sorting channel 121 is assisted by the second selecting electrode 42 which has the same negative polarity as that of the droplet 9 and provides an electrostatic repulsive force (Coulomb's force) to the droplet 9.

Conversely if the droplet has a positive polarity, it is diverted into the second sorting channel 122.

As described above, each droplet 9 can be sorted in units into the first sorting channel 121 or into the second sorting channel 122 according to the information of the droplet 9 of the target object. With this, it becomes possible to sort the droplet 9 in units of nano-litres, pico-litres, or femto-litres.

Accordingly, if the droplet 9 is a droplet which contains a fine particle such as a cell, the fine particle can be kept inside the droplet 9, and the droplet 9 can be sorted in any of the above units into the first sorting channel 121 or into the second sorting channel 122. The diffusion of the fine particles to the outside of the droplets 9 is suppressed.

According to the above-described embodiment, the droplets 9 are carried downstream together with the main liquid 14. Compared to the prior art described in patent document 1, the transportation speed of the droplet 9 is higher which is advantageous from the point of high speed and large quantity processing. In addition, compared to the prior art described in patent document 2, no valves are used to control the flow and a valve-less liquid system is possible. Thus, the malfunction such as flow stagnation or clogging due to the use of valves can be suppressed. In addition, compared to the prior art described in patent document 3, since the insulating property of the main liquid 14 is high, the heating of the main liquid 14 can be suppressed.

Further, according to the micro liquid control system related to the first embodiment of the present invention, an electrostatic field of the opposite or the same polarity as that of the target object is used to divert each target object into respective sorting channels.

### 2. SECOND EMBODIMENT

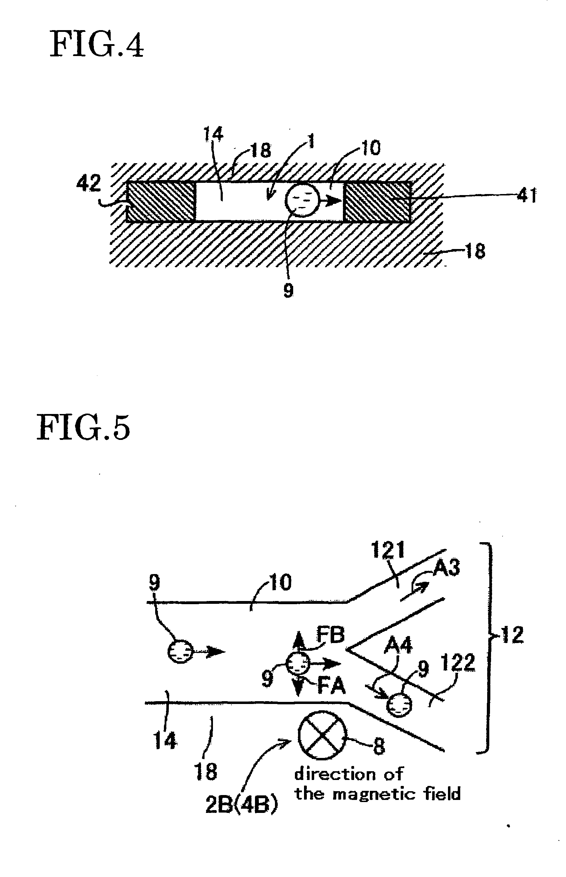

Fig. 5 shows a second embodiment. Also, in this embodiment, in a manner similar to the first embodiment shown in Fig. 1, a droplet forming means 5, a droplet counting means 6 and an information detecting means 7 are provided at the upstream side of a main channel 10 of a microchannel 1. Since the configuration and its function are the same as those of the first embodiment, the description and the figure will not be repeated. Common parts are identified by common reference numerals.

According to the embodiment as shown in Fig. 5, the microchannel 1 comprises a main channel 10 receiving a flow of a main liquid 14 in which fine size droplets 9 are dispersed and a sorting channel means 12 which sorts the droplets 9 at the downstream side of the main channel 10. The sorting channel means 12 has a Y configuration at the downstream side of the main channel 10 and comprises a first sorting channel 121 and a second sorting channel 122. The second embodiment differs from the first embodiment in that a different droplet selecting means 2B is provided, which functions as a selecting means of a target object to select the droplet 9 and supply it into the sorting means 12.

The droplet selecting means 2B is provided at the downstream side of the above-described detecting position 10rA. The droplet selecting means 2B comprises the same electrical charging part 3A (Fig. 2) as that of the first embodiment, giving an electrical charge of a selected polarity to each droplet 9 flowing toward the downstream side (direction of the arrow A2) in the main channel 10 and a sorting means 4B (Fig. 5) which sorts the charged droplets 9.

The sorting means 4B comprises a magnetic field generating means 8. The magnetic field generating means 8 is provided at the downstream side of the electrical charging part 3A and applies an electromagnetic force to the moving charged droplets 9. With this, the droplets 9 are diverted and sorted in the sorting channel means 12.

According to the present embodiment, a shown in Fig. 5, the magnetic field generating means 8 generates a magnetic field which is perpendicular to the main channel 10 of the microchannel 1. That is, it generates a magnetic field which is perpendicular to the paper surface of Fig. 5 and in the direction from above the paper sheet to below. When a droplet 9 carried by the main liquid flow 14 is negatively charged, then according to Fleming's left-hand rule, a magnetic force in the direction of the arrow FA is applied to the droplet 9. Accordingly, the droplet 9 flows into the sorting channel 122 in the direction of the arrow A4 and is sorted in the sorting channel 122.

On the other hand, if the droplet 9 is positively charged, the electromagnetic force is in the direction of the arrow FB. Thus the droplets 9 can be sorted into the first sorting channel 121 or into the second sorting channel 122. The droplets 9 can be sorted into the first sorting channel 121 or into the second sorting channel 122. The droplets 9 can be sorted in units of nano-litres, pico-litres, or femto-litres. All of the flexibility of use and advantages over the prior art described above with reference to the first embodiment are also attainable with this second embodiment in which the sorting is achieved by the magnetic field generating means which is provided at the downstream side of the charging means.

### DROPLET COUNTING MEANS 6

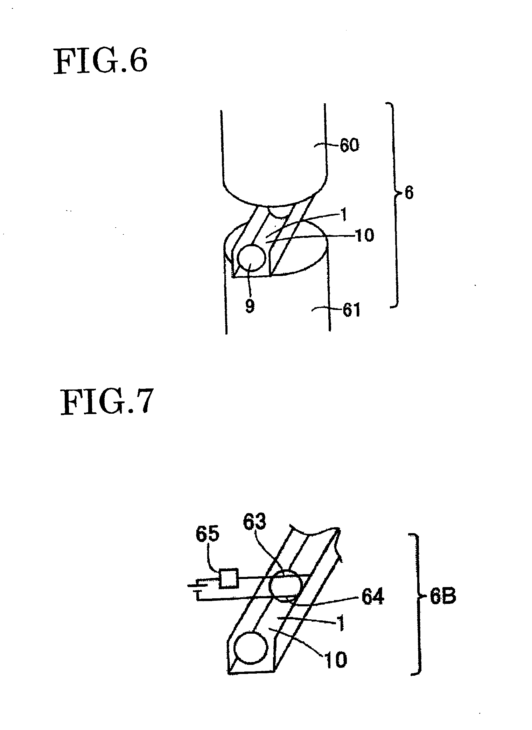

Fig. 6 shows one example of the above-described droplet counting means 6. The droplet counting means 6, light transmission-type, detects individual droplets 9 and counts the number of droplets 9. The droplet counting means 6 comprises a light transmission element 60 and a light receiving element 61 which sandwich the main channel 10 of the microchannel 1 through which the droplets 9 flow. When there is no droplet 9, the light projected by the light sending part 60 is transmitted to the side of the light receiving part 61 and received by the light receiving part 61. When a droplet 9 passes between the light sending part 60 and the light receiving part 61, the light transmission is severed or an amount of receiving light decreases. Thus, the number of the droplets can be counted. Alternatively a light reflection-type method may be used, which monitors light reflected by the droplets 9. Alternatively in the light transmission-type method the transmission element 60 and receiving element 61 may be on the same side of the main channel 10, with a reflecting mirror on the opposite side of the main channel 10.

Fig. 7 shows another example of the droplet counting part 6B. The droplet counting part 6B detects the droplet 9 that is severed by the droplet forming means 5 and counts the number of droplets 9. The droplet counting part 6B comprises a first electrically conductive part 63 and a second electrically conductive part 64 which are provided face to face with some distance between them in the main channel 10 of the microchannel 1 where the droplet 9 flows.

The droplet 9 is electrically conductive. The main liquid 14 has an electrically insulating property. Accordingly, when there is no droplet 9 between the first electrically conducting part 63 and the second electrically insulating part 64, the first electrically conducting part 63 and the second electrically insulating part 64 is nonconductive. When there is the droplet 9 between the first electrically conducting part 63 and the second electrically insulating part 64, the first electrically conducting part 63 and the second electrically insulating part 64 becomes conductive through the droplet 9. Accordingly, the existence of the droplet 9 is detected by the detecting part 65. The number of droplets 9 can be measured by counting the number of conducting events.

### SORTING MEANS 12

When the above method of charging the droplet and sorting it according to the polarity of the charge is used, according to embodiment 1 or embodiment 2, droplets 9 which are identified as the target object are charged with one polarity and droplets 9 which are not identified as the target objects are charged with the opposite polarity. When this method is adopted, with an increasing number of droplets formed per unit time, the spacing between adjacent droplets becomes small and there may be the possibility that the droplets themselves repulse or attract each other with the influence of the charges of the droplets. As the result, the droplets 9 may be combined or the flow may be disturbed, and a sorting error may result. Therefore, according to one further embodiment of the present invention, only the droplets 9 identified as the target object are charged or only the droplets 9 identified as the non-target objects are given a charge. With this arrangement, the above-described problem can be solved.

Specifically, when two sorting channels 121 and 122 which sort the droplets 9 are formed as shown in Fig. 3 or 5, the channel resistance (the pressure loss from the branch of the sorting channel means 12 of the main channel 10 to the exit of the sorting channel means 12: hereinafter referred to simply as pressure loss) of one sorting channel branch is made smaller than the channel resistance (pressure loss) of the other sorting channel branch. Accordingly, normally, the droplets 9 with no electric charge flow into the sorting channel branch having a smaller liquid pass resistance (pressure loss). With this variation of the sorting means, only the droplets 9 which carry a charge are diverted into the channel branch with the higher liquid pass resistance.

With the above-described configuration, the quantity of droplets 9 which are not charged increases, and as a result, the probability that charged droplets 9 are in the neighbourhood of other charged droplets 9 decreases. Accordingly, the possibility that the charged droplets 9 are influenced with the other charged droplets 9 decreases. For this reason, even when the number of droplets formed in unit time increases, the possibility of causing a sorting error decreases. The different channel resistance (pressure loss) for each channel can be realised by using a tube with a different diameter at the exit of one branch of the sorting channel means 12 or by changing the channel width of one branch of the sorting channel means 12.

In a further modification, three or more sorting channel branches for the droplets 9 may be provided. Fig. 9 shows the branch area of the sorting channel means 12 where three sorting channel branches 12 are provided to sort the droplets 9. The sorting channel 12 shown in Fig. 9 shows that a third sorting channel 123 is formed between the sorting channels 121 and 122 of Figs. 3 and 5. In this case, the droplets 9 having a certain characteristic may be charged to a positive polarity by the charging electrodes 31 and 32, the droplets 9 having another characteristic may be charged to a negative polarity, and the droplets 9 having a third characteristic or identified as non-target objects are not charged. With this configuration, according to the first embodiment shown in Fig. 3, the droplets 9 with a positive or negative polarity are given an attractive or repelling force respectively by at least one of the selecting electrodes 41 or 42 and are sorted in opposite directions into the sorting channels 121 and 122. On the other hand, the droplets 9 which have no charge flows into the sorting channel 123 at the centre.

Likewise, in the second embodiment as shown in Fig. 5, the droplets 9 can be sorted into any of three sorting channels. With three-channel sorting, the number of droplets 9 which have no charge increases, and even when the number of droplets formed per unit time increases, the possibility of causing a sorting error may be suppressed.

Further, the number of sorting channels is not necessarily limited to 3. The sorting channels can be 4 or more. In this case, the charge amount given to individual droplets 9 may be controlled by the charging electrodes 31 and 32. As a result, the attractive force or repulsive force by the selecting electrodes 41 or 42 or the electromagnetic force by the magnetic field generating part 8 acting on the droplets 9 is controlled, and the droplets 9 can be sorted into selected sorting channels.

### OTHER DROPLET FORMING MEANS 5

When the dielectric constant of the parent phase liquid 52 is higher than that of the main liquid 14, the droplet 9 can be formed by the effect of Maxwell stresses. The electric field, that is, the electric field line, has the stress to shrink in the direction parallel to the electric field and also has the stress to expand in the direction perpendicular to the electric field. This stress is called Maxwell stresses. The magnitude of this stress is determined basically by the strength of the electric field and the value of the dielectric constant. When liquids with different dielectric constants coexist between the electrodes, the stress to expand in the direction perpendicular to the electric field is larger for the liquid which has the larger dielectric constant. Accordingly, it is inferred that the droplets 9 that has a larger dielectric constant is given an attraction force toward the inside of the electrode gap by Maxwell stresses. Hereafter in this specification, the force by which the parent phase liquid is attracted toward the inside of the electrode gap is called "the attraction force by the electric field".

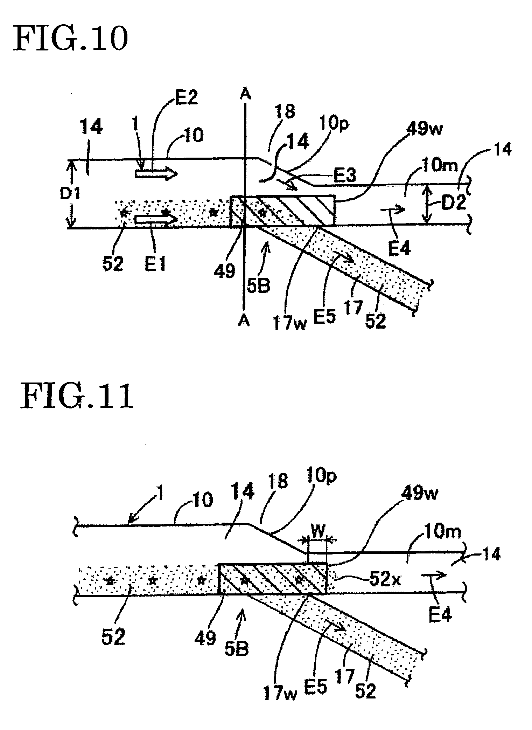

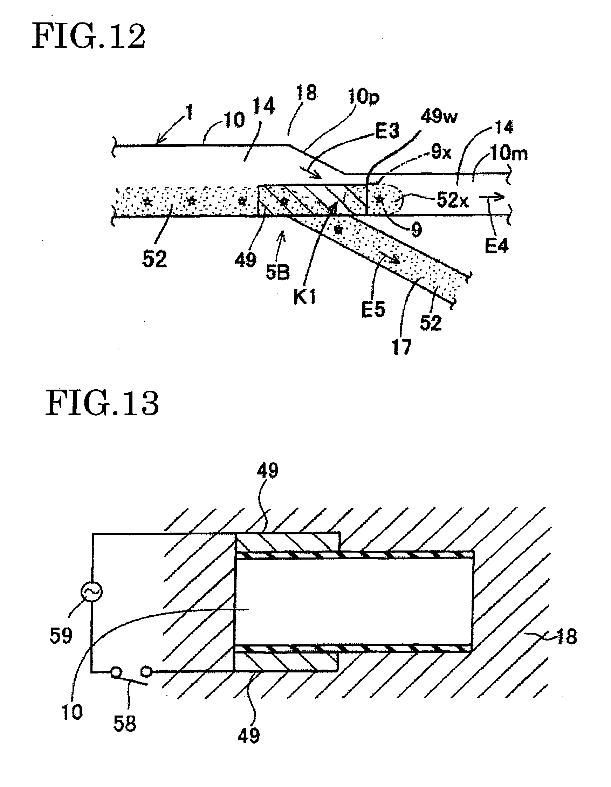

Figs. 10 to 13 are schematic diagrams illustrating another droplet forming means 5B which functions as a target object forming means. Fig. 13 shows a section taken along the line A-A of Fig. 10. As shown in Figs. 10 to 12, a main channel 10 of a liquid channel 1 has a channel width (D1) at the upstream side, narrowing to a narrower channel 10m with a channel width (D2) downstream of an oblique guide surface 10p which defines the change of width between the main channel 10 and the narrower channel 10m. The droplet forming means 5B comprises a branch channel 17 and a deflecting electrode pair 49 which is provided, facing the main channel 10, at the side of the junction with the branch channel 17 and generates "the attraction force by the electric field".

Also, as shown in Fig. 13 the deflecting electrode pair 49 is connected to a power source 59 through a switch 58 and comprises a pair of electrodes one above and one below the main channel 10. In the state shown in Fig. 10 no voltage is applied to the deflecting electrode pair 49.

When the voltage is applied to the deflecting electrode pair 49 as shown in Fig. 10, a parent phase liquid 52 (for example, water) which becomes a parent phase of the droplets 9 flow along one side of the width of the main channel 10 (the same side as the branch channel 17 and the electrode pair 49) in the direction of the arrow E1. In addition, a main liquid 14 (for example an oil phase) flows along the other side of the width of the main channel 10) in the direction of the arrow E2. When the main liquid 14 reaches the oblique guide surface 10p it is forced to flow in the direction of the arrow E3 and enters into the narrower channel 10m of the microchannel 1, and continues to flow along the narrower channel 10m in the direction of the arrow E4. The parent phase liquid 52 which becomes the parent phase of the droplet 9 flows into the branch channel 17 in the direction of the arrow E5.

The dielectric constant of the parent phase liquid 52 is substantially higher than that of the main liquid 14. That is achievable, for example, when the parent phase liquid 52 is water-based and the main liquid 14 is oil-based.

When a droplet is to be formed, a voltage is applied on the deflecting electrode pair 49. Then, "the attraction force by the electric field" is generated which attracts the material of a higher dielectric constant toward the side of the deflecting electrode pair 49. Here, as shown in Fig. 11, the downstream edge 49w of the deflecting electrode pair 49 is extended by an amount W to the downstream side from the branch point 17w of the main channel 10 and the branch channel 17.

Accordingly, as shown in Fig. 11, although most of the parent phase liquid 52 having a larger dielectric constant flows from the main channel 10 to the branch channel 17, some fraction 52x is attracted to face the downstream edge 49w of the deflecting electrode pair 49 with "the attraction force by the electric field" generated by the deflecting electrode pair 49 and is drawn to the downstream side of the main channel 10 from the branch point 17w. As a result, as shown in Fig. 11, some fraction 52x of the parent phase liquid 52 is held slightly downstream of the branch point 17w of the branch channel 17 in the microchannel 1.

In this condition, when the voltage applied to the deflecting electrode pair 49 is turned off, "the attraction force by the electric field" generated by the deflected electrode 49, that is, the force which attracts a liquid of a larger dielectric constant, essentially disappears. The flow direction of the main liquid 14 reverts to the state shown in Fig. 10. Accordingly, the fraction 52x of the parent phase liquid 52 which is about to enter into the narrow channel 10 is severed by the main liquid 14 at a severance point K1 (Fig. 12), and the droplet 9 is formed. The formed droplet 9 is carried downstream through the narrow channel 10m by the main liquid 14 in the direction of the arrow E4. By repeatedly turning on and off the voltage applied to the deflection electrode pair 49, the droplets 9 are formed intermittently and flow downstream through the narrow channel 10m in the direction of the arrow E4. In Fig. 12, the profile 9x of the droplet 9 is shown.

In the case when the droplet forming means 5B of Figures 10 to 13 is adopted, the electric charging means 3A can charge the droplets 9 during the formation of the droplets 9 by the droplet forming means 5B. In this case, the electric charging means 3A is provided at the downstream side of the branch point 17w in the narrow channel 10m.

### OTHER MODIFICATIONS

As described above, in cases where the parent phase liquid 52 flowing in the droplet forming channel 50 as shown in Fig. 1 includes a plurality of fine particles, when the droplet 9 is formed near the junction 54, the plurality of fine particles may be contained in the droplet 9. Thus, the droplet 9 containing the plurality of fine particles can be formed. The fine particles may be either fine powder particles or cell materials. The fine powder particles may include, for example, resin-based, metal-based, or ceramic-based particles. The cell materials may be complete cells or cell constituent material, cell related material, organella, blood cells (leucocyte, erythrocyte, blood platelet etc), animal cells (culture cell isolated tissue, etc.,) vegetable cells, microbes (bacteria, protozoan, fungi, etc), marine organisms (plankton etc.,) sperm, yeast, mitochondria, nucleus, protein, nucleic acid such as DNA or RNA or antibodies.

Accordingly, the parent phase liquid 52 flowing in the droplet forming channel 50 shown in Fig. 1 may be a cell suspension. By "cell suspension" there is meant a liquid which contains cells, and comprises a liquid component and many cells contained in the liquid component. The liquid component may include, for example, a cell buffering solution, a physiological salt solution, a cell isotonic solution, a culture solution, etc. A liquid which does not cause clogging is preferable. In general, the cells will be hydrophilic, and a liquid having a hydrophilic property can be adopted as the liquid component to constitute the cell suspension.

As the information detecting means 7A described above, the configuration can be adopted wherein the droplets 9 are subjected to electromagnetic irradiation, and information concerning the fine particles contained in the droplets 9 is derived. As the electromagnetic irradiation, light may be adopted. The light is preferably a laser beam because of its excellent directivity, and because a laser beam can have a highly constant direction, wavelength and intensity. Suitable laser beams include, for example, Argon laser, He-Ne laser, He-Cd laser and Ga-Al laser. As for the information that can be derived, any information concerning the fine particles that can be obtained by electromagnetic irradiation can be utilized. For example, when a scattering of light is observed, information about the density or dimensions of the fine particles can be obtained. When a fluorescent state is observed, information about the expression state of the fine particles such as cells can probably be obtained. If necessary a fluorescent material can be incorporated into the fine particle material to assist the identification of a fluorescent state as part of the information detection.

In Fig. 1, the droplet counting means 6 is provided at the upstream side of the information detecting means 7A, but it may alternatively be provided at the downstream side. In addition, the switch 33A in Fig. 1 is illustrated as a mechanical switch but may in fact be any switching element of a mechanical on/off type, a semiconductor switching element such as a transistor, an operational amplifier or the like.

## Claims

1. A micro liquid control system comprising:
a liquid flow micro channel (1) comprising a main channel (10) leading to sorting channel means (12);
means (15) for causing a first liquid (14) to flow along the main channel (10) towards the sorting channel means (12);
means (5,5B) for forming a linear stream of fine droplets (9) of the second liquid (52) in the first liquid (14) to flow with the first liquid (14) along the main channel (10);
target selecting means (7a) for examining the second liquid (52) forming the fine droplets (9) and for selecting individual ones of the fine droplets (9) as target droplets to be sorted and gathered together;
electrical charging means (3A) for selectively applying an electrical charge of a given polarity to the target droplets (9); and
sorting means (41,42;8) for selectively deflecting the flow of fine droplets (9) in the main channel (10) so that the target droplets (9) are selectively collected together in the sorting channel means (12), the sorting means (41,42;8) comprising means for establishing an electrostatic or magnetic field across the main channel (10) to interact with the electrically charged fine droplets (9) carried by the first liquid.

2. A control system according to claim 1, wherein the means (5,5B) for forming a linear stream of fine droplets (9) of the second liquid (52) in the first liquid (14) comprises a side channel (50) which joins the main channel (10) at a junction (54) and means (55) for establishing a flow of the second liquid (52) through the side channel (50) and into the man channel (10), the flow of the first liquid (14) through the main channel (10) being sufficient to sever the flow of the second liquid (52) at the junction (54) into the discrete fine droplets (9).

3. A control system according to claim 1, wherein the means (5,5B) for forming a linear stream of fine droplets (9) of the second liquid (52) in the first liquid (14) comprises means for establishing parallel streams of the first liquid (14) and the second liquid (52) in the main channel (10); and means (49) for establishing an intermittent electrical field across the stream of the second liquid (52) sufficient to break up that continuous stream into discrete fine droplets (9) by imposing intermittent Maxwell stresses on the second liquid stream.

4. A control system according to any preceding claim, wherein the electrical charging means (3A) comprises a charging electrode (31A) which induces an electrostatic charge on a leading surface (52a) of the second liquid (52) as it starts to separate as a fine droplet (9) from the remainder of the second liquid (52); and a conductor (36A) connecting the remainder of the second liquid (52) to ground potential, so that when the fine droplet (9) separates from the remainder of the second liquid (52) it carries an electrical charge the polarity of which is controlled by the charging electrode (31 a).

5. A control system according to claim 4, wherein when the fine droplet (9) separates from the remainder of the second liquid (52) it carries an electrical charge the size of which is also controlled by the charging electrode (31A).

6. A control system according to claim 5, wherein the sorting channel means (12) comprises three or more sorting channels (121,122,123) and the sorting means (41,41;8) is effective to deflect selected target droplets (9) into selected ones of the sorting channels depending on the size and polarity of the electrical charge on individual droplets (9).

7. A control system according to any preceding claim, wherein the second liquid (52) contains dispersed therein fine particles and the means (5) for forming a linear stream of fine droplets (9) of the second liquid (52) in the first liquid (14) is effective oto create a monodisperse suspension of at most one fine particle per droplet (9).

8. A control system according to any preceding claim, wherein the second liquid (52) contains dispersed therein cell material; the target selecting means (7A) comprises means (72) for irradiating the second liquid (52) in the zone immediately before separation of a fine droplet (9) and means (74) for detecting whether the droplet (9) being formed contains cell material of a specific type; and the electrical charging means (3A) is effective to apply an electrical charge to the droplet (9) being formed, the polarity and optionally the size of which is dependent on the output of the target selecting means (7A).

9. A control system according to claim 8, wherein thew means (72) for irradiating the second liquid 52) acts to irradiate an area (54r) of the second liquid (52) where the width of the second liquid (52) narrows immediately prior to its severance to separate the resulting fine droplet (9) from the remainder of the second liquid (52).

10. A control system according to any preceding claim, incorporated into a flow cytometer.
